# EUROPEAN PATENT SPECIFICATION

(11) **EP 0 868 485 B1**
(45) Date of publication and mention of the grant of the patent: **25.10.2000**
(21) Application number: 96944456.1
(22) Date of filing: 19.12.1996
(51) Int. Cl.: C08L 63/00, C08L 63/02, C08L 67/02, C08L 71/00, C08L 3/02, C08L 97/02

(54) **COMPOSITIONS COMPRISING HYDROXY-FUNCTIONAL POLYMERS**
ZUSAMMENSETZUNGEN VON HYDROXYFUNKTIONELLEN POLYMEREN
COMPOSITIONS COMPRENANT DES POLYMERES A FONCTION HYDROXY

(30) Priority: 21.12.1995 US 9022 P
(43) Date of publication of application: 07.10.1998
(60) Divisional application: 99204605.2
(73) Proprietor: THE DOW CHEMICAL COMPANY, Midland, Michigan 48674 (US)
(72) Inventor: MANG, Michael, N., Midland, MI 48640 (US); WHITE, Jerry, E., Lake Jackson, TX 77566 (US)
(74) Representative: Raynor, John
(86) International application number: US9620194
(87) International publication number: WO9723564

(56) References cited:
- EP-A- 0 513 679
- GB-A- 1 014 884
- US-A- 3 313 640
- US-A- 4 179 540
- DATABASE WPI Section Ch, Week 7625 Derwent Publications Ltd., London, GB; Class A85, AN 76-46762X XP002030040 & JP 51 050 708 A (SONY CORP) , 4 May 1976
- DATABASE WPI Section Ch, Week 8344 Derwent Publications Ltd., London, GB; Class A25, AN 83-804399 XP002030041 & JP 58 160 368 A (SUMITOMO CHEM CO LTD) , 22 September 1983

## Description

This invention relates to compositions comprising hydroxy-functional polymers and to articles prepared therefrom.

Polysaccharides are inexpensive and have good mechanical properties, but cannot be easily processed as thermoplastics. To take advantage of their low cost, attempts have been made to blend them with synthetic polymers, such as polyolefins, to produce more useful materials. However, the resulting materials often suffer from several problems. For example, the physical properties of the blend of the polysaccharide starch with polyolefin are adversely affected by the incompatibility of and poor adhesion between the polar starch and the non-polar polyolefin. In order to solve this problem, the starch must be modified, or compatibilized with the polyolefin, thereby increasing the cost of the blend. When more polar thermoplastics are employed in the preparation of the blend, other physical properties such as moisture resistance can be adversely affected. It would be desirable to provide a composition having useful mechanical properties comprising a polysaccharide and another hydroxy-functional polymer which is compatible therewith.

The present invention is a composition comprising (1) a polysaccharide, a modified polysaccharide or a naturally-occurring fiber or particulate filler and (2) a thermoplastic hydroxy-functional polyether derived from monomers containing 1 or more epoxy groups.

The hydroxy-functional polyether has been found to adhere strongly to a polysaccharide. This adhesion, and the generally good physical properties of hydroxy-functional polyethers, allows for the preparation of hitherto unknown materials with useful physical properties.

The compositions of the present invention are suitable for use in fabricating molded, extruded or foamed articles, containers, films, film laminates, or coatings using conventional fabricating techniques such as extrusion, compression molding, injection molding, blow molding and similar fabrication techniques commonly used to produce such articles. Examples of such articles include films, foams, sheets, pipes, rods, bags, boxes, meat trays, egg cartons, cups and plates, cutlery, and other disposable consumer items. The compositions of the present invention are also suitable for use as adhesives and encapsulating agents.

The hydroxy-functional polyethers employed in the practice of the present invention are:
(1) hydroxy functional polyethers having repeating units represented by the formula: 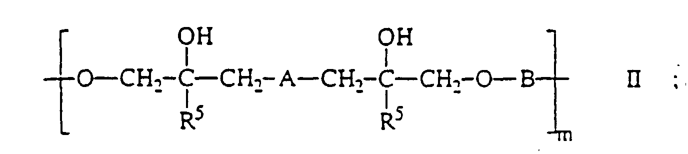 or
(3) hydroxy-functional polyethers having repeating units represented by the formula: 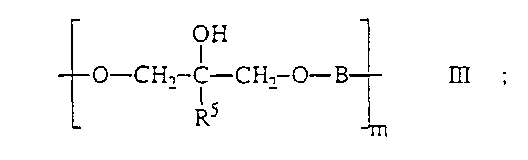
wherein
R⁵ is hydrogen or alkyl, A is an amine moiety or a combination of different amine moieties; B is a divalent organic moiety which is predominantly hydrocarbylene; and m is an integer from 10 to 1000.

The term "predominantly hydrocarbylene" is defined as a divalent radical that is predominantly hydrocarbon, but which optionally contains a minor amount of a heteroatomic moiety such as oxygen, sulfur, imino, sulfonyl, and sulfoxyl.

Preferably, A is 2-hydroxyethylimino-, 2-hydroxypropylimino-, piperazenyl, N,N'-bis(2-hydroxyethyl)-1,2-ethylenediimino-, and B is isopropylidenediphenylene, 1,3-phenylene, or 1,4-phenylene, and R⁵ is hydrogen.

The poly(hydroxy amino ethers) represented by Formula II are prepared by contacting one or more of the diglycidyl ethers of a dihydric phenol with an amine having two amine hydrogens under conditions sufficient to cause the amine moieties to react with epoxy moieties to form a polymer backbone having amine linkages, ether linkages and pendant hydroxyl moieties. These polyethers are described in U.S.Patent 5,275,853. These polyethers can also be prepared by contacting a diglycidyl ether or an epihalohydrin with a difunctional amine.

The poly(hydroxy ethers) represented by Formula III can be prepared by contacting a diglycidyl ether or a combination of diglycidyl ethers with a dihydric phenol or combination of dihydric phenols using the process described in U. S. Patent 5,164,472. Alternatively, the poly(hydroxy ethers) are obtained by allowing a dihydric phenol or a combination of dihydric phenols to react with an epihalohydrin by the process described by Reinking, Barnabeo, and Hale in the Journal of Applied Polymer Science, Volume 7, page 2135 (1963).

While the amount of hydroxy-functional polyethers used depends on a variety of factors, including the specific polymer employed and the desired end uses of the composition, in general, the hydroxy-functional polyesters can be present in an amount of from 1 to 99 weight percent, preferably from 10 to 95 weight percent and, most preferably from 20 to 90 weight percent, based on the total weight of the hydroxy-functional polyester and polysaccharide.

The naturally-occurring fibers or particulate fillers which can be employed in the practice of the present invention for preparing the composition are, for example, wood flour, wood pulp, wood fibers, cotton, flax, hemp, or ramie fibers, rice or wheat straw, chitin, chitosan, cellulose materials derived from agricultural products, nut shell flour, corn cob flour, and mixtures thereof. Polysaccharides which can be employed in the practice of the present invention for preparing the composition are the different starches, celluloses, hemicelluloses, xylanes, gums, pectins and pullulans. Polysaccharides are known and are described, for example, in Encyclopedia of Polymer Science and Technology, 2nd edition, 1987. The preferred polysaccharides are starch and cellulose.

Modified polysaccharides which can be employed in the practice of the present invention for preparing the composition are the esters and ethers of polysaccharides, such as, for example, cellulose ethers and cellulose esters, or starch esters and starch ethers. Modified polysaccharides are known and are described, for example, in Encyclopedia of Polymer Science and Technology, 2^{nd} edition, 1987

The term "starch" as used herein, refers to carbohydrates of natural, vegetable origin, composed mainly of amylose and/or amylopectin, and includes unmodified starches, physically modified starches, such as thermoplastic, gelatinized or cooked starches, starches with a modified acid value (pH) where acid has been added to lower the acid value of a starch to a range of from 3 to 6, gelatinized starches, ungelatinized starches, cross-linked starches and disrupted starches (starches which are not in particulate form). The starches can be in granular, particulate or powder form. They can be extracted from various plants, such as, for example, potatoes, rice, tapioca, corn, pea, and cereals such as rye, oats, and wheat.

Celluloses are known and are described, for example, in Encyclopedia of Polymer Science and Technology, 2nd edition, 1987. Celluloses are natural carbohydrate high polymers (polysaccharides) consisting of anhydroglucose units joined by an oxygen linkage to form long molecular chains that are essentially linear. Cellulose can be hydrolyzed to form glucose. The degree of polymerization ranges from 1000 for wood pulp to 3500 for cotton fiber, giving a molecular weight of from 160,000 to 560,000. Cellulose can be extracted from vegetable tissues (wood, grass, and cotton). Celluloses can be used in the form of fibers.

The composition of the present invention may also contain various additives such as, for example, plasticizers, lubricants, pigments, foaming agents, extenders, stabilizers, chemical modifiers, and flow accelerators. Each of these additives is known and several types of each are commercially available.

In general, the compositions of the present invention can be prepared by mixing (1) a thermoplastic hydroxy-functional polyether and (2) a polysaccharide, a modified polysaccharide or a naturally-occurring fiber or particulate filler and, optionally (3) other additives in an intensive mixer, such as a Haake mixer, a Banbury mixer, single- screw extruder, twin-screw extruder, or an injection-molding machine, at a temperature and for a time sufficient to provide an intimate, well-dispersed mixture of the components. Preferably, the components are brought together and processed in an appropriate melt extruder from which the blend is extruded in the form of powder or strands. The powders or strands are then pelletized or formed into granules for injection molding and other thermal processes. Standard techniques and apparatuses well known in the art can be used for these processes.

The material can be fabricated into films using processes well known to those skilled in the art, such as by cast film extrusion, blown film extrusion, and can be incorporated in multilayer constructions such as coextruded cast or blown films, with or without intermediate adhesive layers or layers containing recycled scrap material from the fabrication process.

The material can be extruded into shapes such as profiles, tubes, rods, strips, tapes, sheets, or strands, and may be further formed by molding using well known methods such as compression or injection molding, or thermoforming or vacuum molding.

The material may be in the form of a foam or cellular structure, as a flexible, rigid, or structural foam, with open, closed, or partially opened-cellular morphologies. The foam can be conveniently formed by extrusion, or by expansion of beads into a heated mold to form a shaped article. The extruded foam may be further formed by thermoforming into shaped articles. The foam may also be directly extruded into useful shapes such as rods, slabs, planks, or boards. The articles and shapes so formed are useful, for example, for packaging, insulation, and cushioning purposes.

The foam of the present invention is generally prepared by heating the composition comprising a polysaccharide, a modified polysaccharide, a naturally occurring fiber or particulate filler, and a hydroxy-functional polyether to form a plasticized or molten polymer material, incorporating a blowing agent to form a foamable gel, and extruding the gel through a die to form the foam product. The blowing agent can be incorporated into the polymer material before melting, or may be incorporated after the polymer material is heated to a temperature at or above its melting point. The blowing agent may be incorporated or mixed into the melt polymer material by any means known in the art such as with an extruder, mixer, or blender. The blowing agent is mixed with the melt polymer material at an elevated pressure sufficient to prevent substantial expansion of the melt polymer material and to generally disperse the blowing agent homogeneously therein. Optionally, a nucleator may be blended in the polymer melt or dry blended with the polymer material prior to plasticizing or melting. The foamable gel is typically cooled to a lower temperature to optimize physical characteristics of the foam structure. The gel is then extruded through a die of desired shape to a zone of lower or reduced pressure than that in which the gel is maintained prior to extrusion through the die. The lower pressure may be superatmospheric or subatmospheric, but is preferably at an atmospheric level.

Blowing agents useful in making the present foam structures include inorganic agents, organic blowing agents, and chemical blowing agents. Suitable inorganic blowing agents include carbon dioxide, nitrogen, argon, water, air, and helium. Organic blowing agents include aliphatic hydrocarbons having 1 to 9 carbon atoms and fully and partially halogenated aliphatic hydrocarbons having 1 to 4 carbon atoms.

The present foam has the density from 5 to 200 kilograms per cubic meter. The foam has an average cell size from 0.1 to 5.0 millimeters. The foam may be open or closed-cell.

Though the preferred process for making the present foam is an extrusion process, it is understood that the above structure may be formed by the expansion of beads, which may be molded at the time of expansion to form structures of various shapes.

The composition of the present invention is also useful as hot-melt adhesives, and can be formulated with tackifying resins, plasticizers, waxes, and/or conventional additives in varying amounts as are known to those skilled in the art.

The composition may be fabricated into a container using conventional processes such as blow molding, injection molding, vacuum forming, thermoforming, injection blow molding, extrusion blow molding, and pultrusion.

The composition can be used as a coating or a laminate, and can be applied to a substrate by methods such as calendering, curtain coating, extrusion coating, roll coating, or spray coating.

The composition can be used as an encapsulant capable of slow or controlled release of a pharmacologically active agent, a catalyst, a biocide or a fertilizer, and can be prepared by compounding the material with, as an additional component, the pharmacologically active agent, the biocide, the fertilizer, or the fertilizer, either during or after the composition is prepared. In the case of active materials that might not be stable under the processing conditions employed to produce the composition, the composition of the invention can be applied to particles of the active agent by spray coating, solution coating, or other well known methods to produce the encapsulated active ingredient.

The composition may also be in the form of a substrate comprising a polysaccharide, such as wood, paper, textile, or a starch article, optionally containing a hydroxy-functional polyether derived from monomers containing one or more epoxy groups, coated with a hydroxy-functional polyether derived from monomers containing one or more epoxy groups. The hydroxy-functional polyether can be used to modify the surface or structural properties of the substrate, to protect the substrate in use. The coating can be conveniently applied using well known methods such as extrusion, calendering, pressure lamination, roll coating, powder coating, curtain coating, or solution coating. The substrate is preferably a paper, cardboard, cellulose film, modified cellulose film, starch film, a modified starch film, wood, or a film or an article comprising a polysaccharide, a modified polysaccharide, a naturally occurring fiber or particulate filler, and a hydroxy-functional polyether. The substrate is most preferably paper, cardboard, or an article comprising a polysaccharide, a modified polysaccharide, a naturally occurring fiber or particulate filler, and a hydroxy-functional polyether.

The following working examples are given to illustrate the invention and should not be construed as limiting its scope. Unless otherwise indicated, all parts and percentages are by weight.

### Example I

The poly(hydroxy amino ether) derived from the reaction of the diglycidyl ether of bisphenol A with ethanolamine was compounded with varying amounts of hardwood flour (American Wood Fibers grade 20010) using a mechanical Brabender Plasticorder with roller blades in a nominal 60 cc counter-rotating mixer head at 180°C. The polymer was loaded and processed at 63 rpm for two minutes, then the hardwood flour was added and processed under the conditions shown in Table I.

**Table I**

| Example number | Weight % wood flour | Minutes processed | Final torque (m-g) |
|---|---|---|---|
| 2(a) | 10 | 5 | 2500 |
| 2(b) | 30 | 3 | 3200 |
| 2(c) | 50 | 2 | 4500 |

The compounded materials were compression-molded into test plaques using a 4 inch by 4 inch by 1/16 inch thick frame mold chase between two flat stainless steel plates using Fluoroglide™ CP as a mold release. The material was molded at 200°C for 3 minutes using 1250 psi on the mold cavity. The plaque was cooled under pressure to below 45°C before demolding. ASTM Type IV tensile test bars were machined from these plaques and tested using an Instron 4507 testing frame at a crosshead speed of 0.2 inch/minute. The test results are shown in Table II.

**Table II**

| Example number | Tensile strength at break (psi) | % Elongation at break | Tensile modulus (psi) |
|---|---|---|---|
| 2(a) | 6500 | 10.6 | 522,000 |
| 2(b) | 10,300 | 3.5 | 670,000 |
| 2(c) | 11,100 | 2.2 | 813,000 |

### Example 2

The poly(hydroxy ether) of bisphenol A (35 g, PAPHEN™ PHENOXY RESIN PKHHMM from Phenoxy Associates) was compounded with 15 grams of dried corn starch using a Haake Rheocord 9000 torque rheometer equipped with a Haake Model 600 mixer using roller blades at a bowl temperature of 160°C. The polymer and starch were loaded and processed at 60 rpm for ten minutes. The torque and melt temperature equilibrated at a torque of about 1650 m-g at 183°C after about 5 minutes.

The compounded material was compression-molded into test plaques using a 4 inch by 4 inch by 1/16 inch thick frame mold chase between two flat stainless steel plates using Fluoroglide™ CP (a product of Norton Performance Plastic Company) an aerosol fluorocarbon mold release agent. The material was molded at 200°C for 3 minutes using 625 psi on the mold cavity. The plaque was then cooled under pressure to below 45°C before demolding. ASTM Type IV tensile test bars were machined from these plaques and tested as in Example 1. The test results are shown in Table III

**Table III**

| Tensile strength at break (psi) | % Elongation at break | Tensile modulus (psi) |
|---|---|---|
| 8431 | 2.47 | 499,600 |

### Example 3

The poly(hydroxy amino ether) derived from the reaction of the diglycidyl ether of bisphenol A with ethanolamine (35 g) was compounded with 15 grams of dried corn starch (Buffalo 3401) using a Haake Rheocord 9000 torque rheometer equipped with a Haake Model 600 mixer using roller blades at a bowl temperature of 160°C. The polymer and starch were loaded and processed at 60 rpm for ten minutes. The torque and melt temperature equilibrated at a torque of about 1500 m-g at 183°C after about 5 minutes.

The compounded material was compression -olded into test plaques using a 4 inch by 4 inch by 1/16 inch thick frame mold chase between two flat stainless steel plates using Fluoroglide™ CP as a mold release agent. The material was molded at 200°C for 3 minutes using 625 psi on the mold cavity. The plaque was then cooled under pressure to below 45°C before demolding. ASTM Type IV tensile test bars are machined from these plaques and tested. The test results are shown in Table IV.

**Table IV**

| Tensile strength at break (psi) | % Elongation at break | Tensile modulus (psi) |
|---|---|---|
| 8134 | 2.75 | 551,000 |

The data above indicate that addition of starch to a hydroxy-functional polyether in accordance with the present invention produces materials having useful mechanical properties.

## Claims

1. A composition of matter comprising (1) a pc lysaccharide, a modified polysaccharide, or a naturally occurring fiber or particu ate filler and (2) a thermoplastic hydroxy functional polyether having repeating units represented by any one of the following formulas: 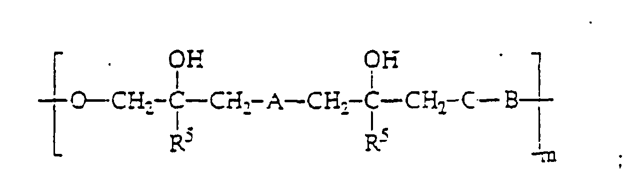 or 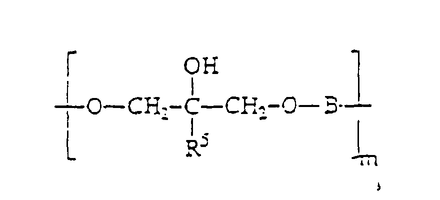 wherein R⁵ is hydrogen or alkyl; A is an amine moiety or a combination of different amine moieties; B is a divalent organic moiety which is predominantly hydrocarbylene ; and m is an integer from 10 to 1000.

2. The composition of Claim 1, wherein R⁵ is hydrogen.

3. The composition of Claim 1 wherein A is 2-hydroxyethylimino-, 2-hydroxypropylimino-, piperazenyl, N,N'-bis(2-hydroxyethyl)-1,2-ethylenediimino-, and B is isopropylidenediphenylene, 1,3-phenylene, or 1,4-phenylene, and R⁵ is hydrogen.

4. The composition of Claim 1, wherein B is isopropylidenediphenylene, 1,3-phenylene, or 1,4-phenlyene, and R⁵ is hydrogen.

5. The composition of Claim 1, wherein the thermoplastic hydroxy-functional polyether is derived from the reaction of an epihalohydrin and a bisphenol.

6. The composition of Claim 1, wherein the polysaccharide is a starch or a cellulose.

7. The composition of Claim 6, wherein the starch is derived from potato, rice, corn or wheat.

8. The composition of Claim 6, wherein the starch is a granular starch, and the cellulose is in the form of a fiber.

9. The composition of Claim 6, wherein the starch is a thermoplastic starch.

10. The composition of Claim 6, wherein the cellulose is extracted from moon pulp or cotton fibers.

11. The composition of Claim 1, wherein the modified polysaccharide is an ether or an ester of the polysaccharide.

12. The composition of Claim 11, wherein the modified polysaccharide is a cellulose ether or cellulose ester.

13. The composition of Claim 1, wherein the naturally-occurring fiber or particulate filler is wood flour, wood pulp, wood fibers, cotton, flax, hemp, or ramie fibers, rice or wheat straw, chitin, chitosan, cellulose materials derived from agricultural products, nut shell flour, com cob flour, or mixtures thereof.

14. The composition of Claim 1, wherein the thermoplastic hydroxy-functional polyether is present in an amount of from 1 to 99 weight percent, and the polysaccharide, a modified polysaccharide, or a naturally-occurring fiber or particulate filler is present in an amount of from 99 to 1 weight percent, based on the weight of the two components.

15. The composition of Claim 1, in the form of a film.

16. The composition of Claim 1, in the form of a molded or extruded article.

17. The composition of Claim 1, in the form of an open-ceil or closed cell foam.

18. The composition of Claim 1, in the form of an adhesive.

19. The composition of Claim 1, in the form of a rigid or flexible container.

20. The composition of Claim 1, in the form of a packaging material.

21. The composition of Claim 1, in the form of a coating.

22. The composition of Claim 1, in the form of a laminate.

23. The composition of Claim 1, in the form of an encapsulant capable of slow or controlled release of a pharmacologically active agent, a catalyst, a biocide or a fertilizer.

24. An article comprising a substrate of a polysaccharide coated with a thermoplastic hydroxy-functional polyether as defined in Claim 1.

25. The article of Claim 24, in which the polysaccharide is a paper product.

26. A laminate comprising a thermoplastic hydroxy-functional polyether as defined in Claim 1 bonded to a substrate comprising, paper, cardboard, cellulose film, modified cellulose film, starch film, modified starch fiim, or wood.

27. A process for preparing a blend, which comprises mixing a thermoplastic hydroxy-functional polyether as defined in Claim 1 with a polysaccharide, modified polysaccharide, or naturally-occurring fiber or particulate filler in an intensive mixer at a temperature and for a time sufficient to provide a well-dispersed mixture of the components.

## Patentansprüche

1. Stoffzusammensetzung, umfassend (1) ein Polysaccharid, ein modifiziertes Polysaccharid oder einen natürlich vorkommenden Faser- oder Partikelfüllstoff, und (2) einen thermoplastischen Hydroxy-funktionellen Polyether mit Struktureinheiten, welche durch eine der nachstehenden Formeln dargestellt werden: 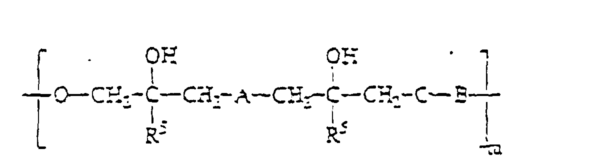 oder 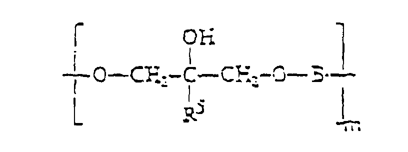 worin R⁵ Wasserstoff oder Alkyl ist, A ein Aminrest oder eine Kombination verschiedener Aminreste ist, B ein bivalenter organischer Rest ist, der vorwiegend aus Kohlenwasserstoff besteht, und m eine ganze Zahl von 10 bis 1000 ist.

2. Zusammensetzung nach Anspruch 1, worin R⁵ Wasserstoff ist.

3. Zusammensetzung nach Anspruch 1, worin A 2-Hydroxyethylimino-, 2-Hydroxypropylimino-, Piperazenyl, N,N'-bis(2-hydroxyethyl)-1,2-ethylendiimino-ist, und B Isopropylidendiphenylen, 1,3-Phenylen oder 1,4-Phenylen ist und R⁵ Wasserstoff ist.

4. Zusammensetzung nach Anspruch 1, worin B Isopropylidendiphenylen, 1,3-Phenylen oder 1,4-Phenylen ist und R⁵ Wasserstoff ist.

5. Zusammensetzung nach Anspruch 1, worin der thermoplastische Hydroxy-funktionelle Polyether aus der Reaktion eines Epihalogenhydrins und eines Bisphenols abgeleitet ist.

6. Zusammensetzung nach Anspruch 1, worin das Polysaccharid eine Stärke oder eine Cellulose ist.

7. Zusammensetzung nach Anspruch 6, worin die Stärke von Kartoffel, Reis, Mais oder Weizen abgeleitet ist.

8. Zusammensetzung nach Anspruch 6, worin die Stärke eine granuläre Stärke ist und die Cellulose die Form einer Faser hat.

9. Zusammensetzung nach Anspruch 6, worin die Stärke eine thermoplastische Stärke ist.

10. Zusammensetzung nach Anspruch 6, worin die Stärke aus Holzstoff oder Baumwollfasern extrahiert ist.

11. Zusammensetzung nach Anspruch 1, worin das modifizierte Polysaccharid ein Ether oder ein Ester des Polysaccharids ist.

12. Zusammensetzung nach Anspruch 11, worin das modifizierte Polysaccharid ein Cellulosether oder Celluloseester ist.

13. Zusammensetzung nach Anspruch 1, worin der natürlich vorkommende Faser-oder Partikelfüllstoff Holzmehl, Holzstoff, Holzfasern, Baumwolle-, Flachs-, Hanf- oder Ramiefasern, Reis- oder Weizenstroh, Chitin, Chitosan, von landwirtschaftlichen Produkten abgeleitete Cellulosematerialien, Nußschalenmehl, Maiskolbenmehl, oder Gemische davon ist.

14. Zusammensetzung nach Anspruch 1, worin der thermoplastische Hydroxy-funktionelle Polyether in einer Menge von 1 bis 99 Gewichtsprozent, und das Polysaccharid, ein modifiziertes Polysaccharid oder ein natürlich vorkommender Faser- oder Partikelfüllstoff in einer Menge von 99 bis 1 Gewichtsprozent, bezogen auf das Gewicht der zwei Komponenten, vorhanden sind.

15. Zusammensetzung nach Anspruch 1 in Form einer Folie.

16. Zusammensetzung nach Anspruch 1 in Form eines geformten oder extrudierten Gegenstands.

17. Zusammensetzung nach Anspruch 1 in Form eines offenzelligen oder geschlossenzelligen Schaumstoffs.

18. Zusammensetzung nach Anspruch 1 in Form eines Klebstoffs.

19. Zusammensetzung nach Anspruch 1 in Form eines steifen oder flexiblen Behälters.

20. Zusammensetzung nach Anspruch 1 in Form eines Verpackungsmaterials.

21. Zusammensetzung nach Anspruch 1 in Form einer Beschichtung.

22. Zusammensetzung nach Anspruch 1 in Form eines Laminats.

23. Zusammensetzung nach Anspruch 1 in Form eines Verkapselungsmateriafs, das zur langsamen oder gesteuerten Freisetzung eines pharmakologischen Wirkstoffs, eines Katalysators, eines Biozids oder eines Düngemittels fähig ist.

24. Gegenstand, umfassend ein Substrat eines Polysaccharids, das mit einem thermoplastischen Hydroxy-funktionellen Polyether, wie in Anspruch 1 definiert, beschichtet ist.

25. Gegenstand nach Anspruch 24, worin das Polysaccharid ein Papierprodukt ist.

26. Laminat, umfassend einen thermoplastischen Hydroxy-funktionellen Polyether, wie in Anspruch 1 definiert, an ein Substrat, umfassend Papier, Karton, Cellulosefolie, modifizierte Cellulosefolie, Stärkefolie, modifizierte Stärkefolie oder Holz, gebunden.

27. Verfahren zur Herstellung eines Gemisches, umfassend das Vermischen eines thermoplastischen Hydroxy-funktionellen Polyethers, wie in Anspruch 1 definiert, mit einem Polysaccharid, einem modifizierten Polysaccharid oder einem natürlich vorkommenden Faser- oder Partikelfüllstoff in einem Intensivmischer bei einer Temperatur und während eines Zeitraums, die ausreichend sind um ein gut dispergiertes Gemisch der Komponenten zu liefern.

## Revendications

1. Composition de matière comprenant :
1) un polysaccharide, un polysaccharide modifié ou une charge en fibres ou en particules existant dans la nature, et
2) un polyéther thermoplastique à groupes fonctionnels hydroxy, comportant des motifs répétitifs représentés par l'une des formules suivantes : 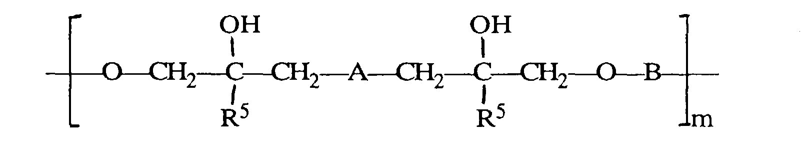 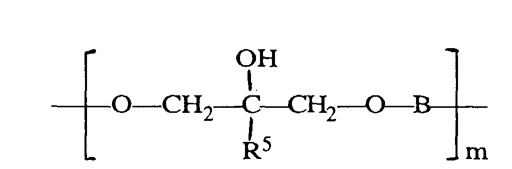 dans lesquelles R⁵ représente un atome d'hydrogène ou un groupe alkyle, A représente un reste d'amine ou une combinaison de divers restes d'amine, B représente un reste organique divalent qui est majoritairement de type hydrocarbylène, et m représente un nombre entier qui vaut de 10 à 1000.

2. Composition conforme à la revendication 1, dans laquelle R⁵ représente un atome d'hydrogène.

3. Composition conforme à la revendication 1, dans laquelle A représente un groupe 2-hydroxyéthylimino, 2-hydroxypropylimino, pipérazényle ou N,N'-bis(2-hydroxyéthyl)-1,2-éthylènediimino, B représente un groupe isopropylidènediphénylène, 1,3-phénylène ou 1,4-phénylène, et R⁵ représente un atome d'hydrogène.

4. Composition conforme à la revendication 1, dans laquelle B représente un groupe isopropylidènediphénylène, 1,3-phénylène ou 1,4-phénylène, et R⁵ représente un atome d'hydrogène.

5. Composition conforme à la revendication 1, dans laquelle le polyéther thermoplastique à groupes fonctionnels hydroxy est issu de la réaction d'une épihalogénhydrine et d'un bisphénol.

6. Composition conforme à la revendication 1, dans laquelle le polysaccharide est un amidon ou une cellulose.

7. Composition conforme à la revendication 6, dans laquelle l'amidon provient de pommes de terre, de riz, de maïs ou de blé.

8. Composition conforme à la revendication 6, dans laquelle l'amidon se présente sous forme de grains, et la cellulose se présente sous forme de fibres.

9. Composition conforme à la revendication 6, dans laquelle l'amidon est un amidon thermoplastique.

10. Composition conforme à la revendication 6, dans laquelle la cellulose est tirée d'une pâte de bois ou de fibres de coton.

11. Composition conforme à la revendication 1, dans laquelle le polysaccharide modifié est un éther ou un ester de polysaccharide.

12. Composition conforme à la revendication 11, dans laquelle le polysaccharide modifié est un éther de cellulose ou un ester de cellulose.

13. Composition conforme à la revendication 1, dans laquelle la charge en fibres ou en particules existant dans la nature est de la farine de bois, de la pâte de bois, des fibres de bois, des fibres de coton, de lin, de chanvre ou de ramie, de la paille de riz ou de blé, de la chitine, du chitosane, une matière cellulosique dérivée de produits de l'agriculture, de la poudre de coques de noix, de la farine d'épis de maïs entiers, ou un mélange de ces matières.

14. Composition conforme à la revendication 1, dans laquelle le polyéther thermoplastique à groupes fonctionnels hydroxy se trouve en une proportion de 1 à 99 % en poids et le polysaccharide, le polysaccharide modifié ou la charge en fibres ou en particules existant dans la nature se trouve en une proportion de 99 à 1 % en poids, ces pourcentages étant rapportés au poids total des deux composants.

15. Composition conforme à la revendication 1, se présentant sous la forme d'un film.

16. Composition conforme à la revendication 1, se présentant sous la forme d'une pièce moulée ou extrudée.

17. Composition conforme à la revendication 1, se présentant sous la forme d'une mousse à cellules ouvertes ou à cellules fermées.

18. Composition conforme à la revendication 1, se présentant sous la forme d'un adhésif.

19. Composition conforme à la revendication 1, se présentant sous la forme d'un récipient flexible ou rigide.

20. Composition conforme à la revendication 1, se présentant sous la forme d'un matériau d'emballage.

21. Composition conforme à la revendication 1, se présentant sous la forme d'un revêtement.

22. Composition conforme à la revendication 1, se présentant sous la forme d'un stratifié.

23. Composition conforme à la revendication 1, se présentant sous la forme d'un agent d'encapsulation capable de libérer lentement ou régulièrement un agent pharmaceutique, un catalyseur, un biocide ou un agent fertilisant.

24. Article comprenant un substrat de polysaccharide revêtu d'un polyéther thermoplastique à groupes fonctionnels hydroxy du type défini dans la revendication 1.

25. Article conforme à la revendication 24, dans lequel le polysaccharide est un produit de type papier.

26. Stratifié comprenant un polyéther thermoplastique à groupes fonctionnels hydroxy, du type défini dans la revendication 1, associé à un substrat comportant un papier, un carton, un film de cellulose, un film de cellulose modifiée, un film d'amidon, un film d'amidon modifié, ou du bois.

27. Procédé de préparation d'un mélange, qui comporte le fait de mélanger un polyéther thermoplastique à groupes fonctionnels hydroxy, du type défini dans la revendication 1, avec un polysaccharide, un polysaccharide modifié ou une charge en fibres ou en particules existant dans la nature, dans un mélangeur à effort intense, à une température suffisante et pendant assez longtemps pour qu'on obtienne un mélange où les deux composants sont bien dispersés l'un dans l'autre.
